# EUROPÄISCHE PATENTSCHRIFT

(11) **EP 3 321 133 B1**
(45) Veröffentlichungstag und Bekanntmachung des Hinweises auf die Patenterteilung: **02.01.2019**
(21) Anmeldenummer: 17001709.9
(22) Anmeldetag: 17.10.2017
(51) Int. Cl.: B60R 11/00

(54) **LÜFTUNGSHALTERUNG, INSBESONDERE FÜR ELEKTRONISCHE GERÄTE**
VENTILATION SUPPORT, IN PARTICULAR FOR ELECTRONIC DEVICES
SUPPORT DE VENTILATION, EN PARTICULIER POUR APPAREILS ÉLECTRONIQUES

(30) Priorität: 15.11.2016 DE 202016007019 U; 03.08.2017 DE 202017004085 U
(43) Veröffentlichungstag der Anmeldung: 16.05.2018
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-A1-102007 034 810
- US-A1- 2010 327 031
- US-A1- 2014 103 087

## Beschreibung

Die Erfindung betrifft eine Lüftungshalterung insbesondere für elektronische Geräte wie Smartphones oder Tablets in Autos.

Lüftungshalterungen sind bereits in verschiedenen Ausführungen bekannt und bestehen aus einem Tragkörper, an dessen Rückseite eine rückwärts abstehende Halteklammer zum Umgreifen einer Lüftungslamelle im Auto und ein Abstützelement angeordnet sind, um die Lüftungshalterung an den Lüftungslamellenlamellenanordnung zu fixieren. An der Vorderseite des Tragkörpers ist dann über ein Gelenk eine Haltevorrichtung oder ein Adapter zum Anbringen einer Haltevorrichtung für ein Smartphone oder ein Tablet angeordnet. DE 10 2007 034810 A1 offenbart eine Lüftungshalterung gemäß dem Oberbegriff des Anspruchs 1.

Die Lüftungshalterungen stellen eine Alternative dar zu Saugnapfhalterungen, die an der Windschutzscheibe oder am Armaturenbrett mithilfe eines Saugnapfes befestigbar sind. Eine Fixierung solcher Saugnapfhalterungen am Armaturenbrett ist aber häufig in Ermangelung hinreichend glatter und geeignet positionierter Anbringungsflächen nicht möglich, und bei Anbringung an der Windschutzscheibe bedingt es zwangsläufig eine Sichtbehinderung, weshalb Lüftungshalterungen als diese Probleme vermeidende Alternative hierzu belegt sind.

Allerdings zeigen sich bei Lüftungshalterungen andere Probleme. Zum einen wird wegen der Verdeckung der Lüftungsschlitze der Luftaustritt behindert, und andererseits kann im Sommer bei Betrieb der Klimaanlage die austretende Kaltluft und im Winter bei Heizungsbetrieb die austretende Warmluft den Betrieb des Smartphones oder Tablets beeinträchtigen.

Es ist auch schon eine Lüftungshalterung bekannt, mit welcher ein teilweiser Versatz der Anordnung des zu haltenden Geräts nach oben oder unten mit Bezug auf die Lüftungslamellenanordnung möglich ist. Bei dieser bekannten Lüftungshalterung ist am einen Ende eines relativ kurzen Arms rückseitig eine Klammer zum Fixieren an einer Lüftungslamelle vorgesehen, und am anderen Endbereich des Arms ist vorderseitig ein Haltebackenpaar für das zu haltende Gerät angeordnet. Dabei ist die Klammer drehbar an dem betreffenden Ende des Arms angeordnet, so dass der Arm auch seitwärts geschwenkt werden kann, und der Arm und die Klammer sind in der jeweils gewählten Drehstellung fixierbar. Diese bekannte Lüftungshalterung erweist sich allerdings als äußerst wackelige Konstruktion, zumal außer der Klammer zum Umgreifen einer Lüftungslamelle keinerlei Abstützung vorhanden ist.

Aufgabe der Erfindung ist es, diesen Problemen abzuhelfen.

Diese Aufgabe wird erfindungsgemäß dadurch gelöst, dass der Tragkörper als Tragarm ausgebildet ist, an dessen einem Endbereich rückseitig mindestens zwei Halteklammern jeweils drehbar und voneinander beabstandet angeordnet sind, und an dessen anderem Endbereich vorderseitig eine Haltevorrichtung oder ein Adapter zum Anbringen einer Haltevorrichtung für ein Smartphone oder ein Tablet angeordnet ist.

Bei der erfindungsgemäßen Lüftungshalterung kann der Tragarm eine beträchtliche Länge haben, so dass das zu haltende Gerät sich mindestens im wesentlichen außerhalb des Luftaustrittsbereichs der Lüftungslamellenanordnung befinden kann, nämlich oberhalb oder unterhalb oder auch seitlich des Luftaustrittsbereichs.

Das Vorsehen von mindestens zwei jeweils drehbar am Tragarm angeordneten Halteklammern, die jeweils zum Umgreifen einer Lüftungslamelle dienen, verleiht der Lüftungshalterung eine stabile Fixierung an der Lüftungslamellenanordnung, denn die Fixierung erfolgt dadurch an mindestens zwei entlang der Länge des Tragarms beabstandeten Stellen. Dies ist im Normalfall an verschiedenen Lüftungslamellen der Fall ist, so dass nicht nur eine wackelfreie Halterung der Lüftungshalterung gewährleistet ist, sondern auch eine Überbeanspruchung oder Beschädigung von Lüftungslamellen vermieden wird. Bei der herkömmlichen, mit einem Arm ausgebildeten Lüftungshalterung besteht diese Gefahr nämlich in erheblichem Maße, zumal dort außer der Halteklammer keine Abstützung vorgesehen ist, weil aufgrund der Drehbarkeit des Arms relativ zur Halteklammer eine zusätzliche rückwärtige Abstützung nicht möglich ist, wie sie bei unmittelbar vor der Lüftungslamellenanordnung sitzenden Lüftungshalterungen ohne Arm vorhanden sind. Die bekannte Lüftungshalterung mit drehbarem Arm übt daher immer ein erhebliches Drehmoment auf die Lamelle aus, an der sie fixiert ist, was zur Instabilität dieser Halterung und zu einer Beschädigungsgefahr für die Lamelle führt.

Bei der erfindungsgemäßen Lüftungshalterung ist auch eine beliebige Schrägstellung oder eine Horizontalstellung des Tragarms möglich, wobei jeweils die Halterung an mindestens zwei beabstandeten Stellen der Lüftungslamellenanordnung und normalerweise an zwei verschiedenen Lamellen erfolgt, so dass deshalb die Halterung stabil und wackelfrei ist.

Die erfindungsgemäße Lüftungshalterung eignet sich auch zur Halterung von Toröffnern oder anderen Geräten oder Vorrichtungen, beispielweise einer Ablage.

Eine vorteilhafte Weiterbildung der Erfindung besteht darin, dass jede der beiden Halteklammern mittels eines fingerbetätigbaren Handrads über einen entsprechenden Getriebemechanismus zwangsweise geschlossen und geöffnet werden kann, so dass die Haltekraft nicht von einer Federvorspannung abhängig ist, sondern in jedem Fall ein festes Umgreifen der jeweiligen Lüftungslamelle und damit ein fester Sitz des Tragarms herbeigeführt werden kann. Damit kann auch unterschiedlich dicken Lüftungslamellen Rechnung getragen werden, die dann unabhängig von ihrer jeweiligen Dicke fest umgriffen werden können. Gleichzeitig werden beim Montieren und Demontieren des Tragarms, weil dazu die Halteklammern zwangsweise geöffnet werden können, die betroffenen Lüftungslamellen weniger beansprucht, als dies bei Halteklammern mit federnd vorgespannten Halteklammerelementen der Fall ist.

Bei einer weiteren Ausführungsform der erfindungsgemäßen Lüftungshalterung die aus zwei die jeweilige Lüftungslamelle umgreifenden Halteklammerelementen bestehen, Haltehaken Anwendung, die um die Hinterkante der jeweiligen Lüftungslamelle herumgreifen und mittels eines fingerbetätigbaren Handrads über eine entsprechechende Getriebeanordnung in Längsrichtung zwischen einer Löseposition und einer Halteposition bewegbar sind.

Ein Ausführungsbeispiel der Erfindung wird nachstehend unter Bezugnahme auf die anliegenden Zeichnungen mehr im Einzelnen beschrieben, in denen zeigt:

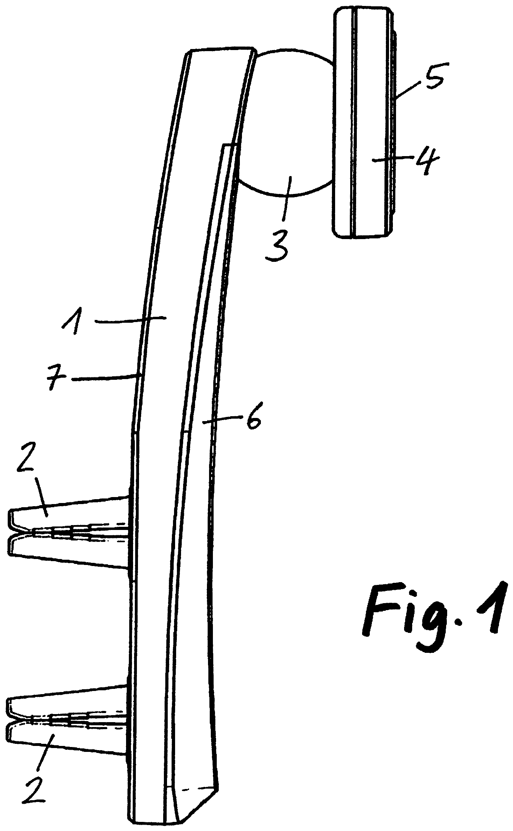

- Fig. 1: eine erfindungsgemäße Lüftungshalterung in Seitenansicht,

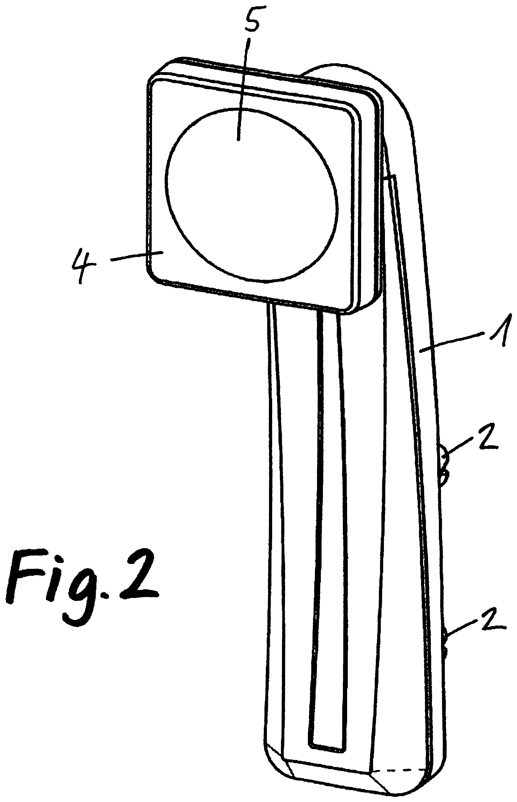

- Fig. 2: die Lüftungshalterung in perspektivischer Ansicht von vorn,
- Fig. 3: die Lüftungshalterung in perspektivischer Ansicht von hinten,
- die Fig. 4 und 5: in Seitenansicht und in perspektivischer Ansicht schräg von vorn eine Lüftungshalterung mit über Handrädchen zu öffnenden und zu schließenden Halteklammern,
- die Fig. 5 und 7: in vergrößerter Schnittdarstellung den Mechanismus der Halteklammern mit den zu ihrer Betätigung dienenden Handrädchen in geöffneter und in geschlossener Position der Halteklammern,
- die Fig. 8 und 9: eine alternative Ausführungsform der Lüftungshalterung in Seitenansicht und in perspektivischer Ansicht schräg von hinten, wobei die Halteklammern der Ausführungsform nach den Fig. 4 bis 7 durch Haltehaken ersetzt sind, die mit fingerbetätigbaren Handrädchen zwischen einer Lösestellung und einer Haltestellung bewegbar sind, und
- die Fig. 10 und 11: in vergrößerter Schnittdarstellung den Betätigungsmechanismus mit den Handrädchen für die Haltehaken in der Lösestellung und der Haltestellung.

Die erfindungsgemäße Lüftungshalterung nach dem dargestellten Ausführungsbeispiel besteht aus einem Tragarm 1, zwei an dessen Rückseite angeordneten Halteklammern 2, und einer an der Vorderseite des Tragarms angeordneten und damit über ein Universalgelenk 3 verbundenen Halterung 4.

Die Halterung 4 ist beim Ausführungsbeispiel als Magnethalterung mit einer Magnetplatte 5 dargestellt, kann aber beispielsweise auch ein als Krallenplatte oder auf andere Weise ausgebildeter Adapter zum Verbinden mit einer Halteschale zur Aufnahme des zu haltenden Geräts oder unmittelbar als Halteschale oder andere Vorrichtung zur Halterung des aufzunehmenden Geräts ausgebildet sein. Das Universalgelenk 3 kann in beliebiger geeigneter Weise ausgebildet sein, was nicht im einzelnen dargestellt ist.

Der Tragarm 1 ist in Halbschalenbauweise als Kastenkörper ausgeführt, nämlich aus einer vorderen Halbschale 6 und einer hinteren Halbschale 7, und ist auf diese Weise gewichtsmäßig sehr leicht und trotzdem stabil und verwindungsfrei ausgebildet.

Die beiden rückseitig am Tragarm 1 angeordneten Halteklammern 2 dienen jeweils zum Umgreifen einer Lüftungslamelle. Sie sind mit Abstand entlang des Tragarms 1 angeordnet und jeweils über einen Drehgelenk 20 mit einem im Tragarm 1 geführten Haltekörper verbunden. Es können auch drei Halteklammern vorgesehen sein. Jedes Drehgelenk 20 ist so ausgebildet, dass es eine Drehung zum Einstellen der gewünschten Drehstellung ermöglicht, aber in der eingestellten Position stabil ist, um eine wackelfreie Fixierung der Lüftungshalterung an der Lüftungslamellenanordnung zu ermöglichen.

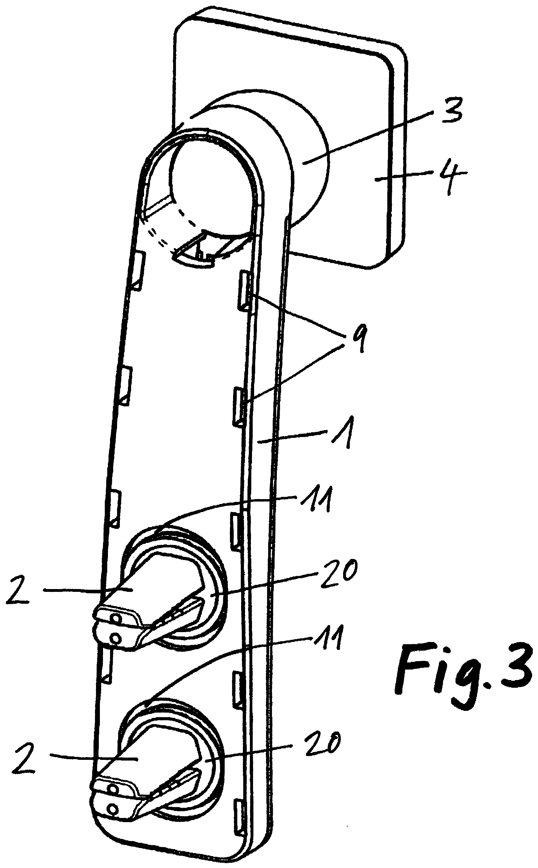

Wie man aus Fig. 3 erkennen kann, ist jede Halteklammer 2 mit ihrem Drehgelenk 20 in einer Langlochöffnung 11 des Tragarms angeordnet und der jeweilige Haltekörper ist im Tragarm verschiebbar, so dass jede Halteklammer 2 um eine gewisse Distanz entlang des Tragarms 1 verschiebbar ist, um notwendige Audgleichsbewegungen zu ermöglichen.

Die beiden Halbschalen 6 und 7 des Tragarms 1 sind durch eine Reihe von Verrastungen miteinander verbunden, die man in der Rückansicht nach Figur 3 andeutungsweise erkennt. Es versteht sich, dass andere Verbindungsmittel, insbesondere Verkleben oder Verschweißen, in gleicher Weise möglich sind.

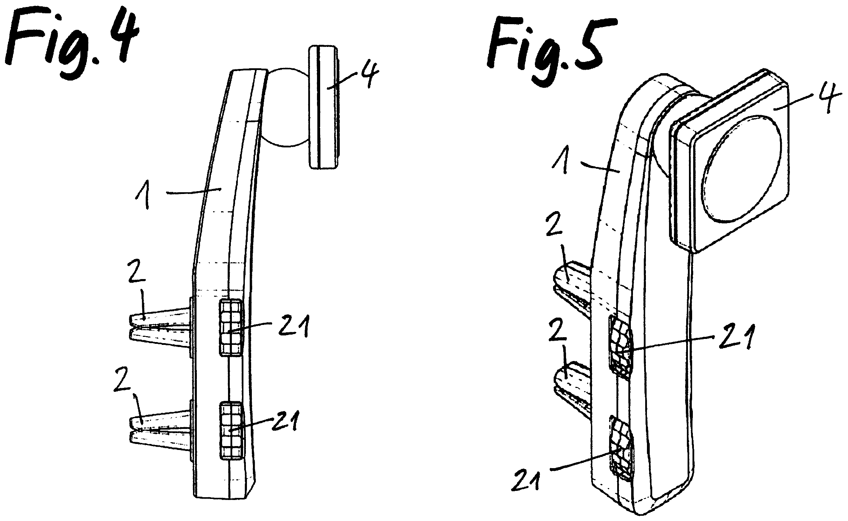

Die Fig. 4 bis 7 zeigen eine Weiterbildung einer erfindungsgemäßen Lüftungshalterung, bei welcher die Halteklammern 2 jeweils mittels einer fingerbetätigbaren Handrädchens 21 zwischen einer Öffnungsstellung und einer Schließstellung zwangsweise bewegbar sind. Die Fig. 4 und 5 zeigen in Seitenansicht und in perspektivischer Ansicht schräg von vorn die Lüftungshalterung mit den jeweils beiderseits seitwärts etwas durch ein Fenster aus dem Tragarm 1 herausragenden Handrädchen 21, damit diese mit zwei Fingern betätigbar sind.

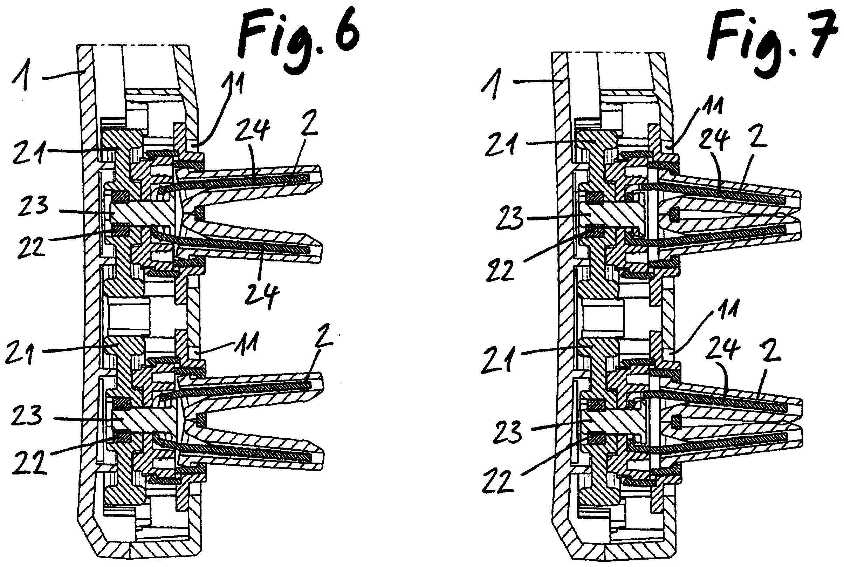

Die Fig. 6 und 7 zeigen in vergrößerten Schnittdarstellungen den Betätigungsmechanismus für die Halteklammern 2. Dieser besteht aus dem Handrädchen 21 mit einer drehfest integrierten Schraubenmutter 22, die auf einen Gewindezapfen 23 wirkt, der beim Drehen des axial festgelegten Handrädchens 21 axial bewegt wird. Die beiden Klammerelemente der Halteklammern 2 sind, wie man in den Zeichnungen nach den Fig. 6 und 7 unschwer sieht, mit Federbügeleinlagen 24 versehen, die mit einem vom Handrädchen 21 entfernten Kopf des verschiebbaren Schafts 23 so zusammenwirken, dass eine axiale Bewegung des Schafts 23 in der Zeichnung nach rechts das Öffnen und das Bewegen in der Zeichnung nach links das Schließen der Halteklammern 2 bewirkt. Die geöffnete Stellung ist in Fig. 6 sichtbar, und die geschlossene Stellung in Fig. 7.

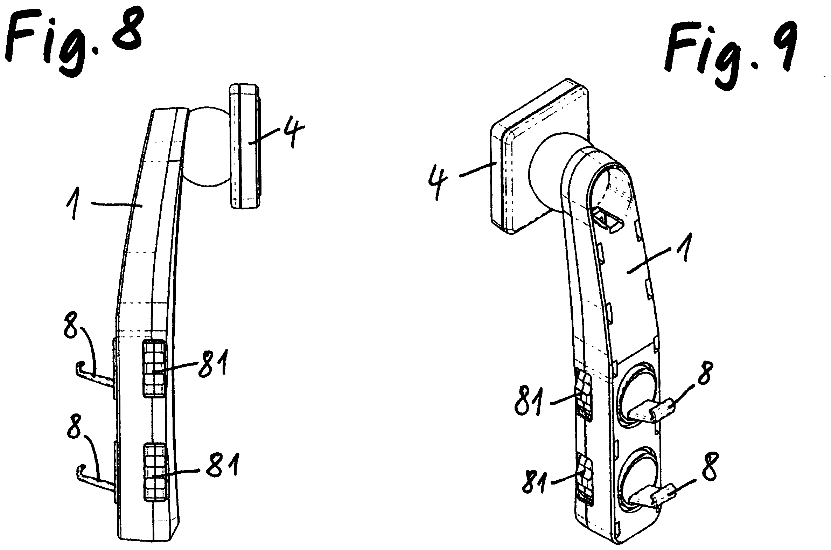

Die Fig. 8 bis 11 zeigen eine alternative Ausführungsform der Lüftungshalterung, bei welcher die Halteklammern 2 der zuvor beschriebenen Ausführungsformen durch Haltehaken 8 ersetzt sind, die wiederum mittels fingerbetätigbarer Handrädchen 81 zwischen einer Lösestellung und einer Haltestellung bewegbar sind.

Die Fig. 8 und 9 zeigen in Seitenansicht und in perspektivischer Ansicht schräg von hinten diese Ausführungsform, wobei die Handrädchen 81 wiederum beiderseits seitwärts durch Fenster etwas aus dem Tragarm 1 überstehen, so dass sie mit zwei Fingern bewegbar sind.

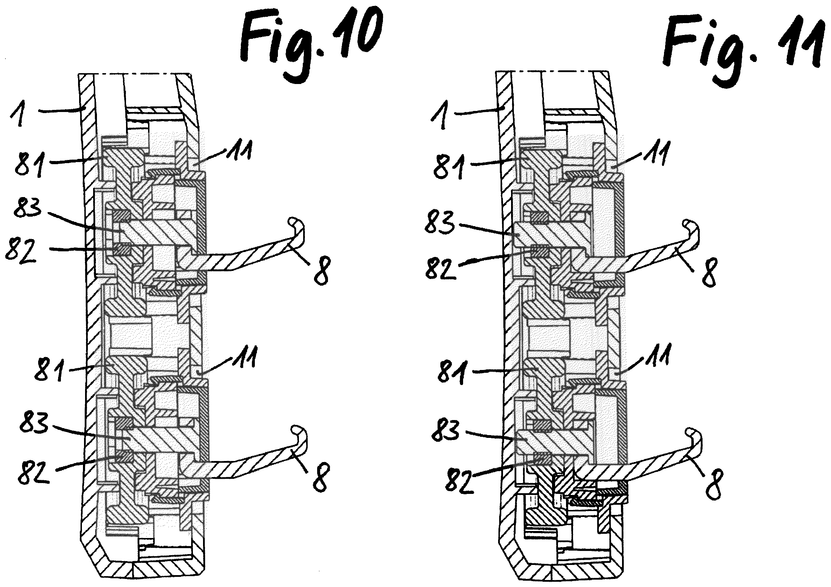

Die Fig. 10 und 11 zeigen jeweils im Schnitt den Betätigungsmechanismus für die Haltehaken 8. Dieser besteht aus dem Handrädchen 81 mit einer integrierten Schraubenmutter 82, die auf einen Gewindezapfen 83 wirkt, der beim Drehen des Handrädchens 81 in axialer Richtung bewegt wird und mit den jeweiligen Haltehaken 8 verbunden ist. Durch axiale Verschiebung des Schafts 83 in der Zeichnung nach rechts wird der Haltehaken 8 in seine Lösestellung bewegt (Fig. 10), und durch Bewegung des Schafts 83 in der Zeichnung nach links in die Haltestellung (Fig. 11).

## Patentansprüche

1. Lüftungshalterung zum Anbringen an einer Lüftungslamellenanordnung in Fahrzeugen zur Halterung von elektronischen Geräten oder anderen Gegenständen, bestehend aus einem Tragkörper (1), an dem rückseitig eine Halteklammer (2) zum Umgreifen einer Lüftungslamelle und vorderseitig eine Haltevorrichtung (4, 5) für ein elektronisches Gerät oder einen anderen Gegenstand angeordnet ist,
**dadurch gekennzeichnet, dass** der Tragkörper (1) als länglicher Tragarm ausgebildet ist und dass die Halteklammer (2) und mindestens eine weitere Halteklammer (2) mit gegenseitigem Abstand und jeweils drehbar an einem Endbereich des Tragarms (1) angeordnet sind und die Haltevorrichtung (4) am entgegengesetzten Endbereich des Tragarms (1) angeordnet ist.

2. Lüftungshalterung nach Anspruch1, wobei jede Halteklammer (2) um eine kurze Distanz in Längsrichtung des Tragarms (1) verschiebbar angeordnet ist.

3. Lüftungshalterung nach Anspruch 1 oder 2, wobei die Haltevorrichtung (4) über ein Universalgelenk (3) mit dem Tragarm (1) verbunden ist.

4. Lüftungshalterung nach einem der Ansprüche 1 bis 3, wobei der Tragarm (1) in Halbschalenbauweise ausgebildet ist.

5. Lüftungshalterung nach einem der Ansprüche 1 bis 4, wobei jeder Halteklammer (2) ein Betätigungsmechanismus zugeordnet ist, bestehend aus einem Handrädchen (21), dessen Drehbewegung über einen Gewindeeingriff in eine Axialbewegung eines Schafts (23) umgesetzt wird, der im Zusammenwirken mit den Enden der beiden Halteklammerlemente jeder Halteklammer (2) die Halteklammer bei einer Axialbewegung des Schafts (23) in der einen Richtung öffnet und in der anderen Richtung schließt.

6. Lüftungshalterung nach Anspruch 5, bei welcher die Halteklammern (2) durch Haltehaken (8) zum Hintergreifen der Lüftungslamellen ersetzt sind und die Haltehaken (8) jeweils mittels des Handrädchens (81) über den axial bewegbaren Schaft (83) zwischen einer Lösestellung und einer Haltestellung bewegbar sind.

## Claims

1. A ventilation-mounted holder for attachment on a ventilation lamella assembly in vehicles for mounting electronic devices or other articles, the holder consisting of a carrier body (1) onto which a holding bracket (2) for engagement over a ventilation lamella is arranged on the backside, and a holding device (4, 5) for an electronic device or another article is arranged on the front side,
**characterised in that** the carrier body (1) is configured as an elongated carrier arm, and that the holding bracket (2) and at least one further holding bracket (2) are each arranged rotatably and spaced apart from one another on an end region of the carrier arm (1), and that the holding device (4) is arranged on the opposite end region of the carrier arm (1).

2. The ventilation-mounted holder according to claim 1, wherein each holding bracket (2) is disposed to be displaceable by a small distance in the longitudinal direction of the carrier arm (1).

3. Ventilation-mounted holder according to claim 1 or 2, wherein the holding device (4) is connected to the carrier arm (1) by means of a universal joint (3).

4. The ventilation-mounted holder according to any one of claims 1 to 3, wherein the carrier arm (1) is configured as a half-shell structure.

5. The ventilation-mounted holder according to any one of claims 1 to 4, wherein each holding bracket (2) is associated with an actuating mechanism consisting of a small hand wheel (21) the rotational movement of which is translated into an axial movement of a stem (23) by means of a threaded engagement, wherein the actuating mechanism, in cooperation with the ends of the two holding bracket elements of each holding bracket (2), opens the holding bracket upon axial movement of the stem (23) in one direction, and closes the bracket upon axial movement of the stem in the other direction.

6. The ventilation-mounted holder according to claim 5, wherein the holding brackets (2) are replaced with holding hooks (8) for engaging the ventilation lamellas from behind, and the holding hooks (8) are in each case moveable between a release position and a holding position via the axially moveable stem (83) by means of the small hand wheel (81).

## Revendications

1. Support de ventilation pour la fixation sur un ensemble des lamelles de ventilation dans des véhicules, pour supporter des dispositifs électroniques ou d'autres objets, consistant en un corps de support (1) sur lequel est disposé à l'arrière un étrier de retenue (2) pour s'engager autour d'une lamelle de ventilation, et, à l'avant, un dispositif de retenue (4, 5) pour un dispositif électronique ou autre objet,
**caractérisé en ce que** le corps de support (1) est configuré sous forme de bras de support allongé, et **en ce que** l'étrier de retenue (2) et au moins un autre étrier de retenue (2) sont disposés au niveau d'une région terminale du bras de support (1) à distance l'un de l'autre, et le dispositif de retenue (4) est disposé au niveau de la région terminale opposée du bras de support (1).

2. Support de ventilation selon la revendication 1, dans lequel chaque étrier de retenue (2) est disposé de manière à pouvoir être déplacé sur une courte distance dans la direction longitudinale du bras de support (1).

3. Support de ventilation selon la revendication 1 ou 2, dans lequel le dispositif de retenue (4) est relié au bras de support (1) au moyen d'un joint universel (3).

4. Support de ventilation selon l'une quelconque des revendications 1 à 3, dans lequel le bras de support (1) est configuré sous forme d'une construction à demi-coquilles.

5. Support de ventilation selon l'une quelconque des revendications 1 à 4, dans lequel chaque étrier de retenue (2) est associé avec un mécanisme d'actionnement, constitué d'une petite manivelle (21), dont le mouvement de rotation est transformé par un engagement fileté en un mouvement axial d'une tige (23), qui, en coopération avec les extrémités des deux éléments de retenue de chaque étrier de retenue (2), ouvre l'étrier de retenue en cas de déplacement axial de la tige (23) dans un sens, et le ferme en cas de déplacement dans l'autre sens.

6. Support de ventilation selon la revendication 5, dans lequel les étriers de retenue (2) sont remplacées par des crochets de retenue (8) pour saisir les lamelles de ventilation par l'arrière, et les crochets de retenue (8) sont mobiles, respectivement au moyen de la manivelle (81) et la tige (83) axialement mobile, entre une position de libération et une position de retenue.
